(19) Europäisches Patentamt
European Patent Office
Office européen des brevets

(11) Veröffentlichungsnummer: **0 414 066 A2**

# (12) EUROPÄISCHE PATENTANMELDUNG

(21) Anmeldenummer: **90115372.6**

(22) Anmeldetag: **10.08.90**

(51) Int. Cl.[5]: **C08G 63/64**, C08G 63/185, C08G 63/193, C08G 63/50, C08G 63/18, C08G 63/79

(30) Priorität: **23.08.89 DE 3927771**

(43) Veröffentlichungstag der Anmeldung: **27.02.91 Patentblatt 91/09**

(84) Benannte Vertragsstaaten: **DE FR GB IT**

(71) Anmelder: **BAYER AG**

**D-5090 Leverkusen 1 Bayerwerk(DE)**

(72) Erfinder: **Weider, Richard, Dr.**
**Quettingerstrasse 78**
**D-5090 Leverkusen 3(DE)**
Erfinder: **Arlt, Dieter, Prof.Dr.**
**Rybniker Strasse 2**
**D-5000 Köln 80(DE)**
Erfinder: **Leuschke, Christian D.I.**
**Neckarstrasse 36**
**D-4047 Dormagen 1(DE)**
Erfinder: **Scholl, Thomas, Dr.**
**Elbingerstrasse 33**
**D-4005 Meerbusch 2(DE)**

## (54) Polyester und Polyestercarbonate.

(57) Polyester und Polyestercarbonate der Formel

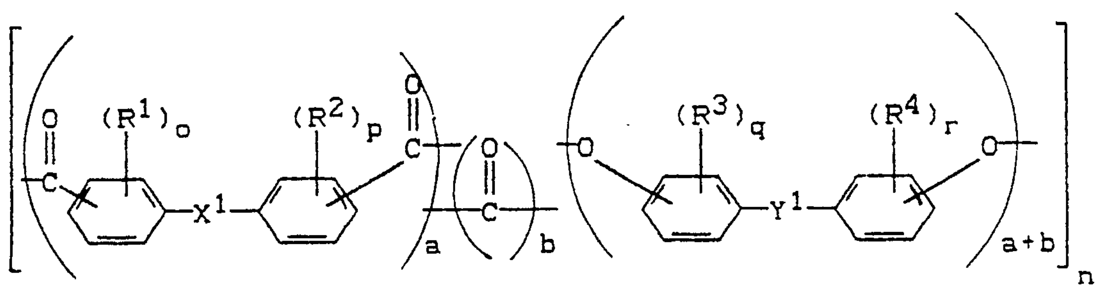

(I),

in der $R^1$ bis $R^4$, o bis r, n, a und b sowie $X^1$ und $Y^1$ die in der Beschreibung gegebene Bedeutung haben, können nach dem Phasengrenzflächenkondensationsverfahren aus den zugrunde liegenden Bisphenolen der Formel

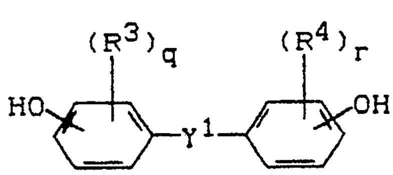

(VI),

den aromatischen Dicarbonsäurechloriden der Formel

EP 0 414 066 A2

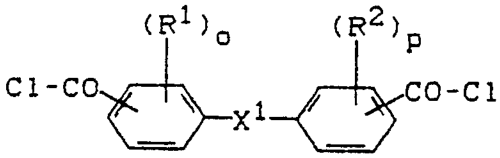

(VII)

und Phosgen hergestellt werden.

Die neuen Polyester und Polyestercarbonate vereinen hervorragende Wärmeformbeständigkeit und Lichtechtheit. Sie können sowohl als thermoplastische Werkstoffe allein oder als Polymer-Legierungsbestandteile als auch als Licht(UV)-Stabilisator oder als Licht(UV)-stabilisierende Überzüge eingesetzt werden. Demzufolge überstreichen ihre Polykondensationsgrade n den Bereich von 2 bis 100.

## POLYESTER UND POLYESTERCARBONATE

Die Erfindung betrifft neue aromatische Polyester und Polyestercarbonate, die sich durch ihre hohe Wärmeformbeständigkeit und Lichtechtheit auszeichnen.

Aromatische Polyester und Polyestercarbonate aus Terephthal- bzw. Isophthalsäure, Phosgen und technisch zugänglichen Bisphenolen sind seit langem bekannt und finden aufgrund ihrer hohen Warmeformbeständigkeit zahlreiche Anwendungen in der Technik. Ein Nachteil dieser Polymeren besteht jedoch in ihrer geringen Stabilität gegenüber Lichteinwirkung, insbesondere gegenüber der Einwirkung des im Licht enthaltenen UV-Anteils. Selbst stabilisierte Typen vergilben unter Lichteinwirkung rasch. Es bestand daher der Wunsch, den stark einschränkenden Nachteil der mangelnden Lichtstabilität zu überwinden.

Es wurden neuen Polyester und Polyestercarbonate der Formel

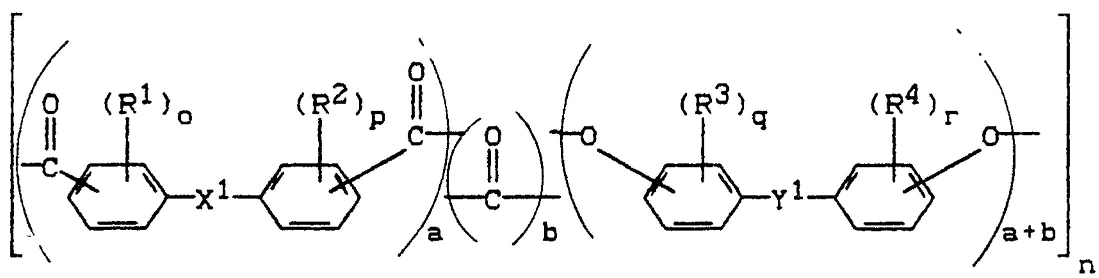

(I)

gefunden, in der

$R^1$, $R^2$, $R^3$ und R unabhängig voneinander geradkettiges oder verzweigtes $C_1$-$C_4$-Alkyl, geradkettiges oder verzweigtes $C_1$-$C_4$-Alkoxy oder Chlor bedeuten,

o, p, q und r unabhängig voneinander einen der Werte Null, Eins, Zwei, Drei oder Vier annehmen,

n Polykondensationsgerade von 2 bis 100 anzeigt,

a und b die Molzahlen der Dicarboxylatkomponente bzw. der Carbonatkomponente und a + b die Molzahl der Bisphenolatkomponente anzeigen und der Term $100 \cdot a/(a+b)$ Werte von 5 bis 100 annehmen kann,

$X^1$ für geradkettiges oder verzweigtes $C_1$-$C_{12}$-Alkylen, geradkettiges oder verzweigtes $C_2$-$C_{12}$-Alkyliden, $C_5$-$C_{15}$-(Alkyl)Cycloalkylen, $C_5$-$C_{15}$-(Alkyl)Cycloalkyliden oder eine der Gruppen

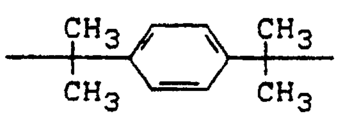 bzw. 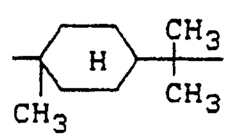

steht und

$Y^1$ eine Einfachbindung, geradkettiges oder verzweigtes $C_1$-$C_{12}$-Alkylen, geradkettiges oder verzweigtes $C_2$-$C_{12}$-Alkyliden, $C_5$-$C_{15}$-(Alkyl)Cycloalkylen, $C_5$-$C_{15}$-(Alkyl)Cycloalkyliden, -O-, -S-, -$SO_2$-, -CO- oder eine der Gruppen

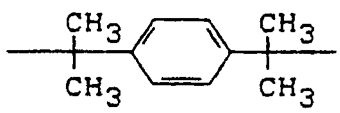 bzw. 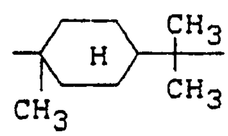

bedeutet, wobei mindestens einer der Indices o, p, q und r verschieden von Null ist oder der Term $100 \cdot a/(a+b)$ Werte von 5 bis 99,9 annimmt, wenn $X^1$ für Methylen, geradkettiges $C_2$-$C_7$-Alkyliden oder 1,1-Dimethyl-2,2-propyliden steht.

$C_1$-$C_4$-Alkyl ist beispielsweise Methyl, Ethyl, Propyl, Isopropyl, Butyl, Isobutyl oder tert.-Butyl, bevorzugt Methyl oder Ethyl, besonders bevorzugt Methyl.

$C_1$-$C_4$-Alkoxy ist beispielsweise Methoxy, Ethoxy, Propoxy, Isopropoxy, Butoxy, Isobutoxy, tert.-Butoxy, bevorzugt Methoxy oder Ethoxy, besonders bevorzugt Methoxy.

Die Indices o, p, q und r bedeuten unabhängig voneinander einen der Werte Null, Eins, Zwei, Drei oder Vier, bevorzugt Null, Eins oder Zwei; wenn diese Indices den Wert Null annehmen, steht ein Wasserstoffatom anstelle eines Substituenten.

$C_1$-$C_{12}$-Alkylen ist beispielsweise Methylen, Dimethylen, Trimethylen, Tetramethylen, Pentamethylen, Hexamethylen usw. bis Dodecamethylen. Mit Ausnahme der Methylengruppe gehen die beiden Bindungen der Alkylengruppe von verschiedenen C-Atomen aus; hierbei kann eine $\alpha,\omega$-Verknüpfung von Alkylen mit den beiden benachbarten aromatischen Kernen vorliegen (geradkettiges Alkylen), oder es liegt eine beliebige andere Verknüpfung vor (verzweigtes Alkylen).

$C_2$-$C_{12}$-Alkyliden ist beispielsweise Ethyliden, Propyliden usw. in ähnlicher Weise wie Alkylen, nur daß die beiden Bindungen zu den benachbarten aromatischen Kernen stets von dem gleichen C-Atom ausgehen. Die höheren Alkylidenreste können in der dem Fachmann bekannten Weise auch verzweigt sein. Bevorzugtes Alkyliden hat 3 bis 12 C-Atome und schließt die 1,1-Alkylidengruppen aus. Besonders bevorzugtes Alkyliden hat 3 bis 8 C-Atome und schließt die 1,1-Alkylidengruppen aus.

$C_5$-$C_{15}$-(Alkyl)Cycloalkylen ist ein zweifach gebundener cycloaliphatischer Rest, bei dem die Bindungen von zwei verschiedenen C-Atomen ausgehen; solche cycloaliphatischen Reste können alkylsubstituiert sein. Beispiele sind: Cyclopentylen, Cyclohexylen, Cycloheptylen, Cyclooctylen usw., Methyl-, Dimethyl-, Trimethyl-substituiertes Cyclopentylen, Methyl-, Dimethyl-, Trimethyl-substituiertes Cyclohexylen, entsprechende einfach oder mehrfach durch Ethyl, Propyl oder Butyl substituierte cycloaliphatische, zweifach gebundene Reste.

$C_5$-$C_{15}$-(Alkyl)Cycloalkyliden ähneln den soeben beschriebenen $C_5$-$C_{15}$-(Alkyl)Cycloalkylengruppen mit der Ausnahme, daß die beiden Bindungen stets von einem C-Atom ausgehen. Beispiele sind: Cyclopentyliden, Cyclohexyliden, Cycloheptyliden usw. sowie die entsprechenden einfach oder mehrfach durch Methyl, Ethyl, Propyl oder Butyl substituierten Cycloalkylidenreste.

Die Indices a und b beschreiben die Molzahlen der in den erfindungsgemäßen Polyestern und Polyestercarbonaten enthaltenen Dicarboxylatkomponente bzw. Carbonatkomponente; die Summe a+b beschreibt die Molzahl der Bisphenolatkomponente. Der Term $100 \cdot a/(a+b)$ zeigt die Molprozente an, zu denen die Dicarboxylatkomponente in den erfindungsgemäßen Polyestern und Polyestercarbonaten enthalten ist. Dieser Term kann Werte von 5 bis 100, bevorzugt 50 bis 100, besonders bevorzugt 80 bis 100, annehmen. In den oben beschriebenen Fällen nimmt dieser Term Werte von 5 bis 99,9, bevorzugt 5 bis 99,5, besonders bevorzugt 50 bis 99,5, ganz besonders bevorzugt 80 bis 99,5, an. Es ist selbstverständlich möglich, daß die erfindungsgemäßen Polyester und Polyestercarbonate im Rahmen dieser angegebenen Molprozente auch mehrere der unter die obige Formel gehörenden Dicarboxylatkomponenten und/oder mehrere der unter die obige Formel gehörenden Bisphenolatkomponenten enthalten kann, mit anderen Worten, daß in einem Makromolekül verschiedene Dicarboxylatkomponenten und/oder verschiedene Bisphenolatkomponenten enthalten sein können. Dies gilt sowohl für Dicarboxylatkomponenten bzw. Bisphenolatkomponenten, die sich in den Resten $R^1$, $R^2$ und $X^1$ bzw. $R^3$, $R^4$ und $Y^1$ sowie in den Indices o und p bzw. q oder r unterscheiden, als auch für diejenigen, die sich durch verschiedene Positionen der Carboxylat-CO-Gruppen bzw. durch verschiedene Positionen der Bisphenolat-O-Atome unterscheiden. So können beispielsweise die beiden Carboxylat-CO-Gruppen beide p-ständig, beide m-ständig oder eine p-ständig und eine m-ständig zur Verknüpfung $X^1$ angeordnet sein; es kann jedoch auch ein Gemisch dieser Positionsisomeren Verwendung finden, wie dies beispielsweise aus der gleichzeitigen Verwendung von Terephthal-und Isophthalsäure in Polyestern des Standes der Technik geläufig ist. Ähnliches gilt für die Bisphenolatkomponente.

In bevorzugter Weise enthalten die erfindungsgemäßen Polyester und Polyestercarbonate eine oder mehrere Dicarboxylatkomponenten der Formel

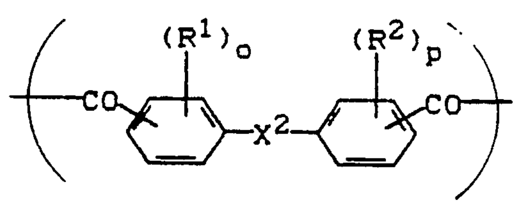

(II),

in der

$R^1$, $R^2$, o und p den angegebenen Bedeutungsumfang haben und

$X^2$ für geradkettiges oder verzweigtes $C_3$-$C_{12}$-Alkyliden mit Ausnahme der 1,1-Alkylidengruppen, $C_5$-$C_{10}$-(Alkyl)Cycloalkylen, $C_5$-$C_{10}$-(Alkyl)Cycloalkyliden oder eine der Gruppen

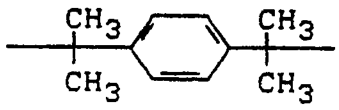 bzw. 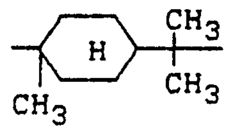

steht, wobei mindestens einer der Indices o und p bzw. einer der Indices q und r der Bisphenolatkomponente verschieden von Null ist oder der Term 100•a/(a+b) Werte von 5 bis 99,5 annimmt, wenn $X^2$ für geradkettiges $C_3$-$C_7$-Alkyliden oder 1,1-Dimethyl-2,2-propyliden steht.

In besonders bevorzugter Weise enthalten die erfindungsgemäßen Polyester und Polyestercarbonate eine oder mehrere Dicarboxylatkomponenten der Formel

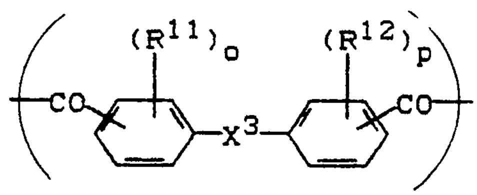 (III),

in der
$R^{11}$ und $R^{12}$ unabhängig voneinander Methyl, Ethyl oder Chlor bedeuten,
o und p den angegebenen Bedeutungsumfang haben und
$X^3$ für geradkettiges oder verzweigtes $C_3$-$C_8$-Alkyliden mit Ausnahme der 1,1-Alkylidengruppen, $C_5$-$C_{10}$-(Alkyl)Cycloalkylen, $C_5$-$C_{10}$-(Alkyl)Cycloalkyliden oder eine der Gruppen

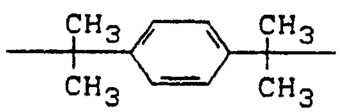 bzw. 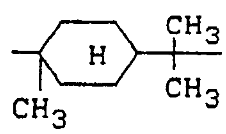

steht, wobei mindestens einer der Indices o und p bzw. einer der Indices q und r der Bisphenolatkomponente verschieden von Null ist oder der Term 100•a/(a+b) Werte von 5 bis 99,9 annimmt, wenn $X^3$ für geradkettiges $C_3$-$C_7$-Alkyliden oder 1,1-Dimethyl-2,2-propyliden steht.

Weitere bevorzugte erfindungsgemäße Polyester und Polyestercarbonate sind solche, in denen an die Stelle der Indices o und p die Indices $o'$ und $p'$ mit dem Bedeutungsumfang Null, Eins oder Zwei unabhängig voneinander treten.

Weitere bevorzugte erfindungsgemäße Polyester und Polyestercarbonate enthalten eine oder mehrere Bisphenolatkomponenten der Formel

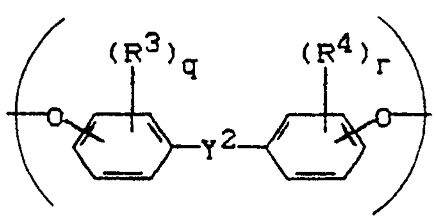 (IV),

in der
$R^3$, $R^4$, q und r den angegebenen Bedeutungsumfang haben und
$Y^2$ geradkettiges oder verzweigtes $C_3$-$C_8$-Alkyliden mit Ausnahme der 1,1-Alkylidengruppen, $C_5$-$C_{10}$-(Alkyl)-Cycloalkylen, $C_5$-$C_{10}$-(Alkyl)Cycloalkyliden oder eine der Gruppen

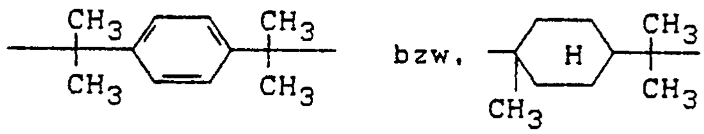

bedeutet.

Weitere besonders bevorzugte erfindungsgemäße Polyester und Polyestercarbonate enthalten eine oder mehrere Bisphenolatkomponenten der Formel

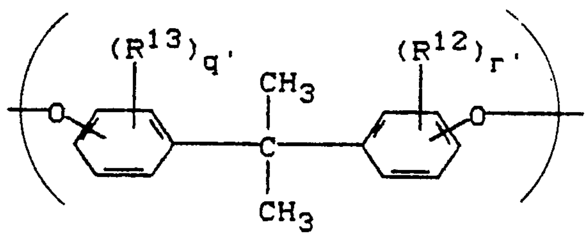

(V),

in der

$R^{13}$ und $R^{14}$ unabhängig voneinander Methyl, Ethyl oder Chlor bedeuten und

$q'$ und $r'$ unabhängig voneinander einen der Werte Null, Eins oder Zwei annehmen.

Die Erfindung betrifft weiterhin ein Verfahren zur Herstellung von Polyestern und Polyestercarbonaten der Formel (I), das dadurch gekennzeichnet ist, daß a + b Mole eines oder mehrerer Bisphenole der Formel

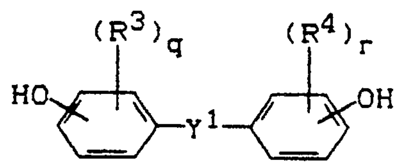

(VI),

in der

$R^3$, $R^4$, $Y^1$, q und r die obengenannte Bedeutung haben,

mit a Molen einer oder mehrerer aromatischer Dicarbonsäurechloride der Formel

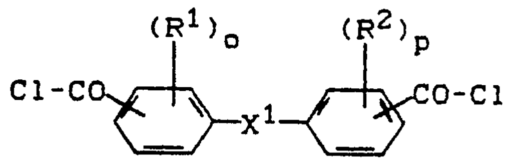

(VII),

in der

$R^1$, $R^2$, $X^1$, o und p die obengenannte Bedeutung haben,

und b Molen Phosgen, wobei b im Falle der reinen Polyester den Wert Null annimmt, nach dem Phasengrenzflächenkondensationsverfahren miteinander umgesetzt werden.

Bisphenole für das erfindungsgemäße Verfahren können nach grundsätzlich bekannten Verfahren hergestellt werden. So ist es beispielsweise möglich, 2,2-Bis-(p-hydroxyphenyl)-propan (Bisphenol A) aus Phenol und Aceton in Gegenwart saurer Katalysatoren herzustellen.

Dicarbonsäurechloride der Formel (VII) können aus den zugrunde liegenden Dicarbonsäuren nach bekannten Methoden, beispielsweise durch Umsetzung mit Thionylchlorid, erhalten werden. Zugrunde liegende Carbonsäuren sind beispielsweise: 2,2-Bis-(4-carboxyphenyl)-propan, 2,2-Bis-(3-carboxyphenyl)-propan, 2-(4-Carboxyphenyl)-2-(3-carboxyphenyl)-propan, 2,2-Bis-(4-Carboxyphenyl)-4-methylpentan, 3,3-Bis-(4-carboxyphenyl)-5-methylheptan, 1,3-Bis-(4-carboxyphenyl)-cyclopentan, 1,3-Bis-(4-carboxyphenyl)-cyclohexan, 1,4-Bis-(4-carboxyphenyl)-cyclohexan, 2,2-Bis-(3,5-dimethyl-4-carboxyphenyl)-propan, 1,1-Bis-(4-carboxyphenyl)-cyclopentan, 1,1-Bis-(4-carboxyphenyl)-cyclohexan, 1,1-Bis-(4-carboxyphenyl)-3-methylcyclohexan, 1,1-Bis-(4-carboxyphenyl)-3,5,5-trimethyl-cyclohexan und andere.

Die zugrunde liegenden Dicarbonsäuren können beispielsweise dadurch erhalten werden, daß man

a) ein Bisphenol der Formel

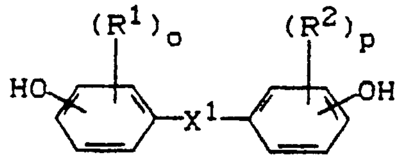

(VIII),

in der

$R^1$, $R^2$, $X^1$, o und p die obengenannte Bedeutung haben,

mit Sulfonsäurederivaten der Formel

$R^5 - SO_2 - R^6$ (IX),

in der

$R^5$ für geradkettiges oder verzweigtes, offenkettiges oder cyclisches $C_1$-$C_{12}$-Alkyl, $C_6$-$C_{12}$-Aryl oder $C_7$-$C_{10}$-Aralkyl steht und

$R^6$ Hydroxyl, Chlor, Brom oder $-O-SO_2-R^5$ ist,

zu den Bissulfonaten der Formel

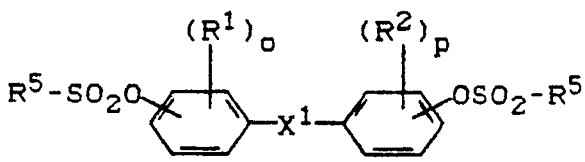

(X),

in der

$R^1$, $R^2$, $R^5$, $X^1$, o und p die oben angegebene Bedeutung haben,

umsetzt,

b) die erhaltenen Bissulfonate in gelöster Form bei einem $H_2$-Druck von 1 bis 100 bar, bevorzugt 1 bis 50 bar, an einem trägerhaltigen oder trägerfreien Hydrierkatalysator in einer Menge von 1 bis 10 g, bevorzugt 2,5 bis 5 g an hydrieraktiver Komponente pro Mol Bissulfonat zum zugehörigen Kohlenwasserstoff der Formel

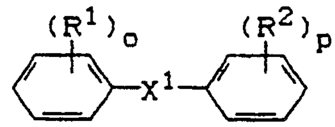

(XI),

in der

$R^1$, $R^2$, $X^1$, o und p die obengenannte Bedeutung haben,

hydriert und

c) den erhaltenen Kohlenwasserstoff in bekannter Weise zweifach acyliert und die Acylgruppen, beispielsweise mit Hypochlorit-Lösung, zu Carboxylgruppen oxidiert.

Die Polykondensation nach dem Grenzflächenverfahren ist dem Fachmann grundsätzlich bekannt (z.B. DE-OS 2 703 376, 3 000 610, 2 714 544, 2 940 024, 3 007 934). Hierbei werden die Bisphenole, gelöst in wäßrig-alkalischer Lösung (bevorzugt wäßrige Natronlauge) in Form ihrer Bisphenolate, mit den aromatischen Dicarbonsäurechloriden, gelöst in mit Wasser nicht mischbaren Lösungsmitteln, wie Methylenchlorid, in das Reaktionsgemisch gebracht, wobei die Polykondensation an der Phasengrenzfläche stattfindet und das entstehende Polymer vom organischen Lösungsmittel aufgenommen wird. Bei diesem Verfahren kann in Gegenwart von Katalysatoren wie quartären Ammoniumsalzen, z.B. Tetra-(n-butyl)-ammoniumbromid, Triethyl-benzyl-ammoniumbromid, Decyl-trimethylammoniumbromid, tertiären Aminen, z.B. Triethylamin oder Emulgatoren wie z.B. Natriumdodecylsulfat gearbeitet werden. Es wird weiterhin stets in Gegenwart von ausreichendem Alkalihydroxid gearbeitet, um die entstehende Salzsäure zu binden. Zur Steuerung des Polykondensationsgrades n wird in Gegenwart von Kettenabbrechern gearbeitet. Als Kettenabbrecher für die aromatischen Polyester und Polyestercarbonate werden vorzugsweise Phenol, Alkylphenole mit $C_1$-$C_{12}$-

Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol.-% (im Falle von Phenolen bezogen auf Diphenole, im Falle von Säurechloriden bezogen auf Säuredichloride) verwendet. Weiterhin kommen Chloride mit bis zu 22 C-Atomen in Betracht.

Die Umsetzung des Bisphenolats einerseits mit dem aromatischen Dicarbonsäurechlorid und dem Phosgen andererseits kann in der Weise erfolgen, daß zunächst das Bisphenolat mit dem aromatischen Dicarbonsäurechlorid vorkondensiert wird und sodann unter Zusatz von Phosgen die Kondensation zu Ende geführt wird oder daß das aromatische Dicarbonsäurechlorid und das Phosgen simultan in das Reaktionsgemisch gegeben werden. Auf diese Weise können sowohl Blockcopolymere als auch statistische Copolymere erhalten werden. Bei der Herstellung reiner Polyester entfällt der Einsatz von Phosgen.

Eine weitere, weniger bevorzugte Polykondensation besteht in der Durchführung eines Schmelzverfahrens, worin Bisphenole der Formel (VI) mit $C_1$-$C_4$-Alkylestern der aromatischen Dicarbonsäuren, die den Säurechloriden (VII) zugrunde liegen, und Diphenylcarbonat unter Abspaltung von $C_1$-$C_4$-Alkanol und Phenol umgesetzt werden. Auch hier entfällt die Umsetzung mit Diphenylcarbonat, wenn es sich um reine Polyester handelt. Das Schmelzverfahren kann in einer weiteren Variante so durchgeführt werden, daß die Acetate der Bisphenole (VI) mit den freien aromatischen Dicarbonsäuren, die den Säurechloriden (VII) zugrunde liegen, und Diphenylcarbonat umgesetzt werden.

Der Polykondensationsgrad n der erfindungsgemäßen Polyester und Polyestercarbonate umfaßt den Bereich 2 bis 100. Im oberen Teil dieses Bereiches, beispielsweise mit Polykondensationsgraden n = 30 bis 100, bevorzugt 40 bis 90, besonders bevorzugt 50 bis 80, stellen die erfindungsgemäßen Polyester und Polyestercarbonate wertvolle thermoplastische Werkstoffe dar, die entweder für sich oder als Polymer-Legierungsbestandteil eingesetzt werden können. Als Bestandteil in Polymerlegierungen stellen sie am Gesamtgewicht solcher polymerer Werkstoffe 0,1 bis 99 Gew.-%, bevorzugt 5 bis 80 Gew.-%, dar. Andere Polymere, denen die erfindungsgemäßen Polyester oder Polyestercarbonate als Legierungsbestandteil zugesetzt werden können, sind beispielsweise: Polycarbonat, aromatische Polyester, Polyethylen- oder butylen-terephthalat und andere.

Die erfindungsgemäßen Polyester oder Polyestercarbonate stellen nahezu farblose, transparente Werkstoffe dar. Sie zeichnen sich durch besonders hohe Glastemperaturen aus. Diese Glastemperatur ist besonders hoch, wenn man anstelle der oben beschriebenen Gemische von Positionsisomeren (para-para-Verknüpfung, para-meta-Verknüpfung bzw. meta-meta-Verknüpfung der Carboxylat- bzw. Phenolatgruppen mit aromatischen Kernen) die isomerenreinen Verbindungen einsetzt. Des weiteren kann die gewünschte Glastemperatur durch die oben beschriebene Wahl des Anteils an Carbonat- und Esterstrukturen in den erfindungsgemäßen Polymeren eingestellt werden, was sich unmittelbar auf die Wärmeformbeständigkeit auswirkt. Mit zunehmendem Anteil an Carbonatstrukturen sinkt in der Regel die Glastemperatur der erfindungsgemäßen Copolymeren.

Diese Wärmeformbeständigkeit, die die der üblichen Polyestercarbonate aus Terephthalsäure/Isophthalsäure und Bisphenolen übertrifft, erschließt weitere, bisher nicht für möglich gehaltene Einsatzgebiete für Chemiewerkstoffe. So besitzt ein Polyestercarbonat, hergestellt aus Bisphenol A und 2,2-Bis-(4-chlorcarbonylphenyl)-propan und 2 Mol-% Carbonateinheiten eine Glastemperatur von 220 °C, während zum Vergleich ein Polyester aus Terephthalsäure/Isophthalsäure (1:1) und Bisphenol A eine Glastemperatur von 199 °C hat.

Die erfindungsgemäßen Polyester und Polyestercarbonate zeichnen sich weiterhin durch eine wesentlich erhöhte Licht(UV)-Beständigkeit aus. Dadurch wird ein Vergilben beim Einsatz als thermoplastischer Werkstoff auch bei langen Belichtungszeiten bedeutend herabgesetzt. Diese Vergilbungsfestigkeit wird auch Polymerlegierungen verliehen, in denen die erfindungsgemäßen Polyester oder Polyestercarbonate als Bestandteil eingearbeitet oder in Form einer Deckschicht aufgebracht werden. Des weiteren ist es jedoch möglich, erfindungsgemäße Polyester bzw. Polyestercarbonate mit niedrigeren Polykondensationsgraden als Licht(UV)-Stabilisatoren nach den üblichen Zumischtechniken bzw. Compoundiertechniken einzusetzen. Für einen solchen Einsatz beträgt der Polykondensationsgrad beispielsweise 5 bis 50, bevorzugt 10 bis 40. Solche Licht(UV)-Stabilisatoren werden anderen Polymeren in einer Menge von 0,1 bis 30 Gew.-%, bevorzugt 0,1 bis 10 Gew.-%, bezogen auf das Gesamtgewicht solcher stabilisierter polymerer Werkstoffe, zugesetzt. Derart zu stabilisierende Polymere sind beispielsweise:

Polycarbonat, Polyethylen-oder butylenterephthalat, aromatische Polyester, Polyamid, Polyurethan, Polyphenylenoxid und -sulfid und andere,

Schließlich ist es möglich, die erfindungsgemäßen Polyester bzw. Polyestercarbonate in Form von Lacken zur oberflächlichen Licht(UV)-Stabilisierung von polymeren Werkstoffen einzusetzen. Für diesen Einsatzzweck beträgt der Polykondensationsgrad n beispielsweise 2 bis 40, bevorzugt 5 bis 30, besonders

bevorzugt 5 bis 20. Solchen Polykondensationsgraden entsprechen Molekulargewichte von 1.000 bis 20.000, bevorzugt 2.500 bis 15.000, besonders bevorzugt 2.500 bis 10.000, wenn das Molgewicht der wiederkehrenden Polykondensationseinheit der Formel (I) beispielsweise mit 500 angesetzt wird; diese Molekulargewichte sind in bekannter Weise abhängig vom Umfang der Substituenten und Verknüpfungsgliedern der Polymeren.

Für die Licht(UV)-Stabilität der erfindungsgemäßen Polyester bzw. Polyestercarbonate spielt die Isomerenverteilung der Verknüpfung in der Bisphenolatkomponente bzw. der Dicarboxylatkomponente, insbesondere die Isomerenverteilung der Verknüpfung in der Dicarboxylatkomponente, keine Rolle.

Eine weitere überraschende Eigenschaft der neuen Polyester und Polyestercarbonate ist ihr für thermoplastische Werkstoffe außerordentlich hoher Brechungsindex. Das bereits genannte Polyestercarbonat aus Bisphenol A und 2,2-Bis-(4-chlorcarbonyl-phenyl)-propan und 2 Mol-% Carbonateinheiten besitzt beispielsweise einen Brechungsindex von 1,611.

Damit eröffnen sich zusätzlich eine große Zahl von neuen Anwendungsmöglichkeiten in der Lichttechnik und Optik, z.B. für die Herstellung von Linsen, Korrektionsbrillengläsern usw., die die Anwendungsmöglichkeiten bisher üblicher aromatischer Polyestercarbonate erweitern.

## Beispiele

Die Beispiele beziehen sich auf Polyestercarbonate bzw. Polyester auf der Basis von 2,2-Bis-(4-hydroxyphenyl)propan (Bisphenol A), dem Dichlorid der genannten Dicarbonsäuren und Phosgen, die nach dem Phasengrenzflächenverfahren (Methylenchlorid/wäßrige NaOH) unter Zusatz von Tetra-n-butyl-ammoniumbromid als Phasentransferkatalysator und von p-tert.-Butyl-phenol als Kettenabbrecher erhalten wurden. Zunächst erfolgte eine Vorkondensation mit dem Säurechlorid, anschließend wurde die Kondensation mit Phosgen vervollständigt. Die Alterungseigenschaften wurden jeweils an unstabilisiertem Material bestimmt.

1. Polyestercarbonat aus 2,2-Bis-(4-chlorcarbonylphenyl)-propan (A):
Zusammensetzung gemäß allgemeiner Formel (I):
a:b = 98:2 (Säurechlorid:$COCl_2$)
Glastemperatur: 220 °C
Molgewichte: $M_w$ 28.350, $M_n$ 10.700
Yellowness-Index (2 mm): 5,5
Brechungsindex: 1,611.

2. Polyestercarbonat aus einem Gemisch (20:60:20) der drei möglichen stellungsisomeren 2,2-Bis-(4(3)-chlorcarbonyl-phenyl)-propane (B):
Zusammensetzung gemäß allgemeiner Formel (I):
a:b = 98:2
Glastemperatur: 171 °C
Molgewichte: $M_w$ 28.420, $M_n$ 10.360
Yellowness-Index (2 mm): 5,3
Brechungsindex: 1.608

3. Polyester aus 1,1-Bis-(4-chlorcarbonyl)-cyclohexan (C):
Zusammensetzung gemäß allgemeiner Formel (I):
a:b = 100:0
Glastemperatur: 191,5 °C
Molgewichte: $M_w$ 20.150, $M_n$ 8.300
Yellowness-Index (2 mm): 6,1

4. Die stark verbesserte Lichtechtheit wird in folgendem Bewitterungstest (Xenon-Weatherometer, 500 und 2.000 Stunden) deutlich (unstabilisierte Materialien):
Angegeben wird jeweils die Zunahme des Yellowness-Index (Δ-YI) von 2 mm-Platten:

| | Δ-YI 500 h | Δ-YI 2000 h |
|---|---|---|
| Polyestercarbonat A | 4 | 16 |
| Polyestercarbonat B | 4 | 16 |
| zum Vergleich: APEC 80, stabilisiert* | 12 | >40 |

*) APEC 80 = Polyestercarbonat aus Bisphenol-A, Tere-.Isophthalsäuredichlorid (80 Mol-%), Phosgen (20 Mol-%) a : b = 80 : 20

5. Durch Verwendung von anderen Bisphenolen an der Stelle von Bisphenol-A in den obigen Beispielen kann in sonst gleicher Weise z.B. erhalten werden:
Polyester aus 2,2-Bis-(4-chlorcarbonyl-phenyl)propan und 1,1-Bis-(4-hydroxyphenyl)-3,3,5-trimethylcyclohexan
Zusammensetzung gemäß allgemeiner Formel (I):
a:b = 100:0
Glastemperatur: 201 °C
Molgewichte: $M_w$ 15.900, $M_n$ 6.100
Yellowness-Index: 5,4
6. Verwendung des Polyestercarbonats aus Beispiel 1 als Licht(UV)-Stabilisator in Form einer Deckschicht auf Bisphenol-A-Polycarbonat:
Dicke der Deckschicht: 30 μm
Beurteilt wurde die Durchlässigkeit der Deckschicht für UV-Licht der Wellenlänge 300 und 380 nm vor und nach Belichtung (72 h) bei 300 nm (UV-Durchlicht-Aufnahme):

| | vor Belichtung | | nach Belichtung | |
|---|---|---|---|---|
| | 300 nm | 380 nm | 300 nm | 380 nm |
| Deckschicht: | transparent | | undurchsichtig | |
| Polycarbonat: | transparent | | transparent | |

Bei der gleichen Probe wurde der Absorptionskoeffizient der Deckschicht bei 350 nm während der Einwirkung von UV-Licht gemessen:

| Zeit: | 0 | 2 | 10 | 20 | 30 | 40 min |
|---|---|---|---|---|---|---|
| Abs.koeff.: | 0,15 | 0,7 | 1,4 | 1,7 | 1,8 | 2 |

Es wird deutlich, daß die Deckschicht bereits nach kurzer Zeit die UV-Strahlung vollständig absorbiert und das darunterliegende Material vor UV-Einwirkung schützt.

## Ansprüche

1. Polyester und Polyestercarbonate der Formel

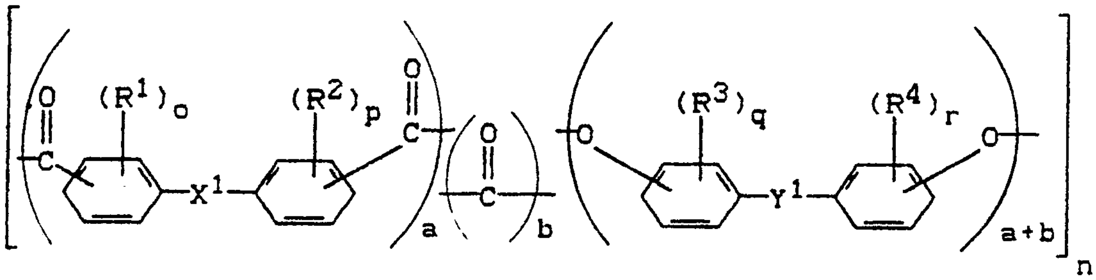

in der
$R^1$, $R^2$, $R^3$ und $R^4$ unabhängig voneinander geradkettiges oder verzweigtes $C_1$-$C_4$-Alkyl, geradkettiges oder verzweigtes $C_1$-$C_4$-Alkoxy oder Chlor bedeuten,
o, p, q und r unabhängig voneinander einen der Werte Null, Eins, Zwei, Drei oder Vier annehmen,
n Polykondensationsgerade von 2 bis 100 anzeigt,
a und b die Molzahlen der Dicarboxylatkomponente bzw. der Carbonatkomponente und a + b die Molzahl der Bisphenolatkomponente anzeigen und der Term $100 \cdot a/(a+b)$ Werte von 5 bis 100 annehmen kann,
$X^1$ für geradkettiges oder verzweigtes $C_1$-$C_{12}$-Alkylen, geradkettiges oder verzweigtes $C_2$-$C_{12}$-Alkyliden, $C_5$-$C_{15}$-(Alkyl)Cycloalkylen, $C_5$-$C_{15}$-(Alkyl)Cycloalkyliden oder eine der Gruppen

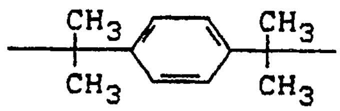 bzw. 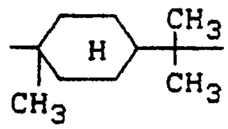

steht und
$Y^1$ eine Einfachbindung, geradkettiges oder verzweigtes $C_1$-$C_{12}$-Alkylen, geradkettiges oder verzweigtes $C_2$-$C_{12}$-Alkyliden, $C_5$-$C_{15}$-(Alkyl)-Cycloalkylen, $C_5$-$C_{15}$-(Alkyl)Cycloalkyliden, -O-, -S-, $-SO_2-$, -CO-oder eine der Gruppen

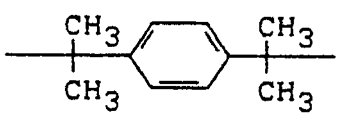 bzw. 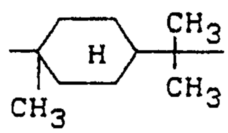

bedeutet, wobei mindestens einer der Indices o, p, q und r verschieden von Null ist oder der Term $100 \cdot a/(a+b)$ Werte von 5 bis 99,9 annimmt, wenn $X^1$ für Methylen, geradkettiges $C_2$-$C_7$-Alkyliden oder 1,1-Dimethyl-2,2-propyliden steht.

2. Polyester und Polyestercarbonate nach Anspruch 1, dadurch gekennzeichnet, daß sie eine oder mehrere Dicarboxylatkomponenten der Formel

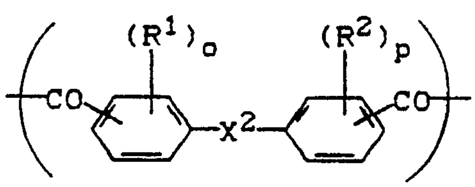

enthalten, in der
$R^1$ und $R^2$ unabhängig voneinander geradkettiges oder verzweigtes $C_1$-$C_4$-Alkyl, geradkettiges oder verzweigtes $C_1$-$C_4$-Alkoxy oder Chlor bedeuten,
o und p unabhängig voneinander einen der Werte Null, Eins, Zwei, Drei oder Vier annehmen und
$X^2$ für geradkettiges oder verzweigtes $C_3$-$C_{12}$-Alkyliden mit Ausnahme der 1,1-Alkylidengruppen, $C_5$-$C_{10}$-(Alkyl)Cycloalkylen, $C_5$-$C_{10}$-(Alkyl)Cycloalkyliden oder eine der Gruppen

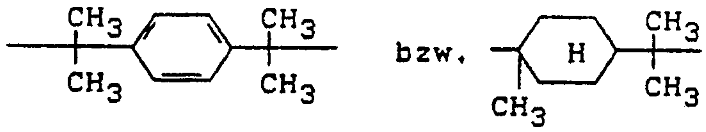

steht, wobei mindestens einer der Indices o und p bzw. einer der Indices q und r der Bis phenolatkomponente verschieden von Null ist oder der Term 100•a/(a+b) Werte von 5 bis 99,5 annimmt, wenn $X^2$ für geradkettiges $C_3$-$C_7$-Alkyliden oder 1,1-Dimethyl-2,2-propyliden steht.

3. Polyester und Polyestercarbonate nach Anspruch 2, dadurch gekennzeichnet, daß sie eine oder mehrere Dicarboxylatkomponenten der Formel

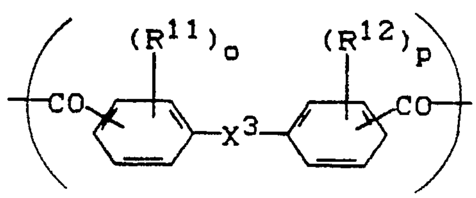

enthalten, in der

$R^{11}$ und $R^{12}$ unabhängig voneinander Methyl, Ethyl oder Chlor bedeuten,

o und p unabhängig voneinander einen der Werte Null, Eins, Zwei, Drei oder Vier annehmen und

$X^3$ für geradkettiges oder verzweigtes $C_3$-$C_8$-Alkyliden mit Ausnahme der 1,1-Alkylidengruppen, $C_5$-$C_{10}$-(Alkyl)Cycloalkylen, $C_5$-$C_{10}$-(Alkyl)Cycloalkyliden oder eine der Gruppen

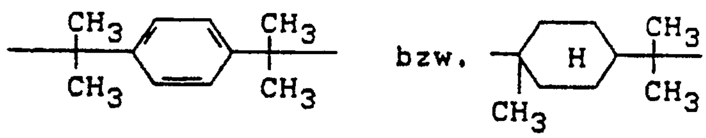

steht, wobei mindestens einer der Indices o und p bzw. einer der Indices q und r der Bisphenolatkomponente verschieden von Null ist oder der Term 100•a/(a+b) Werte von 5 bis 99,9 annimmt, wenn $X^3$ für geradkettiges $C_3$-$C_7$-Alkyliden oder 1,1-Dimethyl-2,2-propyliden steht.

4. Polyester und Polyestercarbonate nach Anspruch 3, dadurch gekennzeichnet, daß anstelle der Indices o und p die Indices o′ und p′ mit dem Bedeutungsumfang Null, Eins oder Zwei unabhängig voneinander treten.

5. Polyester und Polyestercarbonate nach Anspruch 1, dadurch gekennzeichnet, daß sie eine oder mehrere Bisphenolatkomponenten der Formel

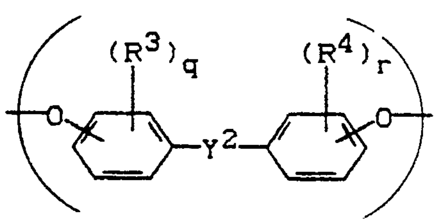

enthalten, in der

$R^3$ und $R^4$ unabhängig voneinander geradkettiges oder verzweigtes $C_1$-$C_4$-Alkyl, geradkettiges oder verzweigtes $C_1$-$C_4$-Alkoxy oder Chlor bedeuten,

q und r unabhängig voneinander einen der Werte Null, Eins, Zwei, Drei oder Vier annehmen und

$Y^2$ geradkettiges oder verzweigtes $C_3$-$C_8$-Alkyliden mit Ausnahme der 1,1-Alkylidengruppen, $C_5$-$C_{10}$-(Alkyl)-Cycloalkylen, $C_5$-$C_{10}$-(Alkyl)Cycloalkyliden oder eine der Gruppen

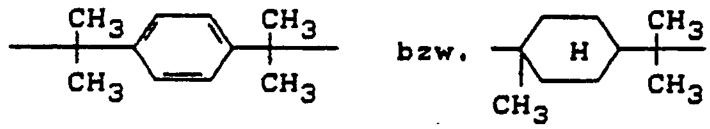

bedeutet.

6. Polyester und Polyestercarbonate nach Anspruch 5, dadurch gekennzeichnet, daß sie eine oder mehrere Bisphenolatkomponenten der Formel

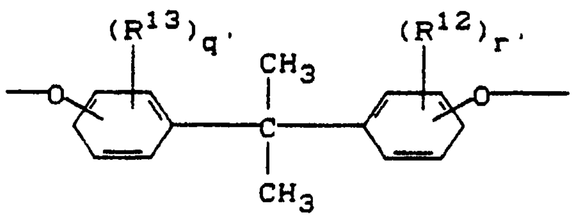

enthalten, in der
$R^{13}$ und $R^{14}$ unabhängig voneinander Methyl, Ethyl oder Chlor bedeuten und
q' und r' unabhängig voneinander einen der Werte Null, Eins oder Zwei annehmen.

7. Polyester und Polyestercarbonate nach Anspruch 1, dadurch gekennzeichnet, daß der Term 100•a/(a+b) Werte von 50 bis 100, bevorzugt 80 bis 100, annimmt.

8. Polyester und Polyestercarbonate nach Anspruch 1, dadurch gekennzeichnet, daß der Polymerisationsgrad n für den Einsatz als thermoplastischer Werkstoff oder als Polymer-Legierungsbestandteil Werte von 30 bis 100, bevorzugt 40 bis 90, besonders bevorzugt 50 bis 80, für den Einsatz als Licht(UV)-Stabilisator Werte von 5 bis 50, bevorzugt 10 bis 40, und für den Einsatz als Lack Werte von 2 bis 40, bevorzugt 5 bis 30, besonders bevorzugt 5 bis 20, annimmt.

9. Verfahren zur Herstellung von Polyestern und Polyestercarbonaten der Formel

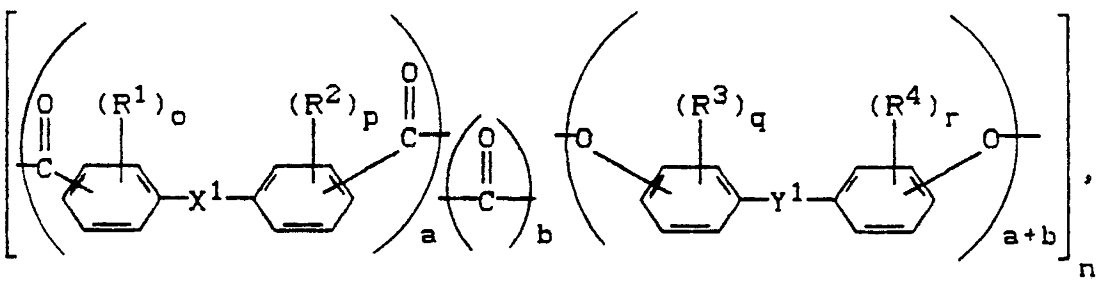

in der
$R^1$, $R^2$, $R^3$ und $R^4$ unabhängig voneinander geradkettiges oder verzweigtes $C_1$-$C_4$-Alkyl, geradket tiges oder verzweigtes $C_1$-$C_4$-Alkoxy oder Chlor bedeuten,
o, p, q und r unabhängig voneinander einen der Werte Null, Eins, Zwei, Drei oder Vier annehmen,
n Polykondensationsgerade von 2 bis 100 anzeigt,
a und b die Molzahlen der Dicarboxylatkomponente bzw. der Carbonatkomponente und a + b die Molzahl der Bisphenolatkomponente anzeigen und der Term 100•a/(a+b) Werte von 5 bis 100 annehmen kann,
$X^1$ für geradkettiges oder verzweigtes $C_1$-$C_{12}$-Alkylen, geradkettiges oder verzweigtes $C_2$-$C_{12}$-Alkyliden, $C_5$-$C_{15}$-(Alkyl)Cycloalkylen, $C_5$-$C_{15}$-(Alkyl)Cycloalkyliden oder eine der Gruppen

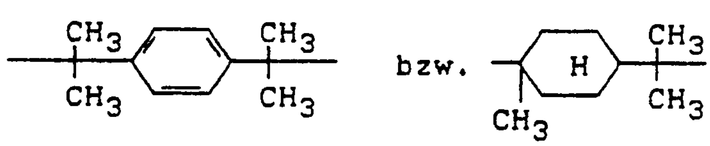

steht und
$Y^1$ eine Einfachbindung, geradkettiges oder verzweigtes $C_1$-$C_{12}$-Alkylen, geradkettiges oder verzweigtes $C_2$-

$C_{12}$-Alkyliden, $C_5$-$C_{15}$-(Alkyl) Cycloalkylen, $C_5$-$C_{15}$-(Alkyl)Cycloalkyliden, -O-, -S-, $-SO_2-$, -CO-oder eine der Gruppen

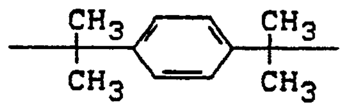

bzw.

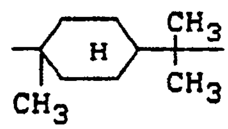

bedeutet, wobei mindestens einer der Indices o, p, q und r verschieden von Null ist oder der Term 100•a/(a+b) Werte von 5 bis 99,9 annimmt, wenn $X^1$ für Methylen, geradkettiges $C_2$-$C_7$-Alkyliden oder 1,1-Dimethyl-2,2-propyliden steht,

dadurch gekennzeichnet, daß a+b Mole eines oder mehrerer Bisphenole der Formel

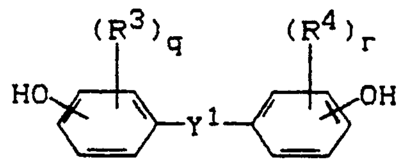

in der

$R^3$, $R^4$, $Y^1$, q und r die obengenannte Bedeutung haben,

mit a Molen einer oder mehrerer aromatischer Dicarbonsäurechloride der Formel

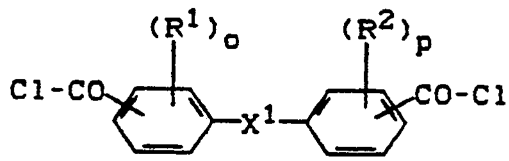

in der

$R^1$, $R^2$, $X^1$, o und p die obengenannte Bedeutung haben,

und b Molen Phosgen, wobei b im Falle der reinen Polyester den Wert Null annimmt, nach dem Phasengrenzflächenkondensationsverfahren miteinander umgesetzt werden.

10. Polymere Werkstoffe, ausgerüstet mit 0,1 bis 99 Gew.-%, bevorzugt 5 bis 80 Gew.-%, bezogen auf das Gesamtgewicht solcher polymerer Werkstoffe, an Polyester oder Polyestercarbonat nach Anspruch 1 als Polymer-Legierungsbestandteil oder ausgerüstet mit 0,1 bis 30 Gew.-%, bevorzugt 0,1 bis 10 Gew.-%, bezogen auf das Gesamtgewicht solcher polymerer Werkstoffe, an Polyester oder Polyestercarbonat nach Anspruch 1 als Licht(UV)-Stabilisator, oder ausgerüstet mit Polyester oder Polyestercarbonat nach Anspruch 1 als Überzugslack oder Deckschicht.